# Europäisches Patentamt
# European Patent Office
# Office européen des brevets

(19)

(11) Veröffentlichungsnummer: **0 057 764**
**B1**

(12)

# EUROPÄISCHE PATENTSCHRIFT

(45) Veröffentlichungstag der Patentschrift:
20.03.85

(21) Anmeldenummer: 81109693.2

(22) Anmeldetag: 14.11.81

(51) Int. Cl.⁴: **B 41 M 5/24**

(54) Verfahren zum Aufzeichnen von farbigen Informationen und zur Wiedergabe von Originalen auf einem Aufzeichnungsträger mit elektrosensitivem Belag.

(30) Priorität: 07.02.81 DE 3104390

(43) Veröffentlichungstag der Anmeldung:
18.08.82 Patentblatt 82/33

(45) Bekanntmachung des Hinweises auf die Patenterteilung:
20.03.85 Patentblatt 85/12

(84) Benannte Vertragsstaaten:
CH DE FR GB IT LI

(56) Entgegenhaltungen:
EP - A - 0 050 674
FR - A - 2 197 345
US - A - 3 995 083

(73) Patentinhaber: ROBERT BOSCH GMBH, Postfach 50,
D-7000 Stuttgart 1 (DE)

(72) Erfinder: Kudelski, Stefan, Ch. della Croix, CH-1052 Le
Mont-sur-Lausanne (CH)
Erfinder: Schlup, Jean-Claude, Ch. des Grand-Champs,
CH-1033 Cheseaux-sur-Lausanne (CH)

ACTORUM AG

## Beschreibung

### Stand der Technik

Die Erfindung geht aus von einem Verfahren, wie es in der älteren europäischen Patentanmeldung 80 106 509.5 (Veröffentlichungsnummer 0 050 674) bereits vorgeschlagen worden ist, die zum Stand der Technik gemäss Art. 54(3) EPÜ zählt. Bei diesem älteren Verfahren wird ein Aufzeichnungsträger verwendet, dessen unter dem elektrosensitiven Belag liegende Farbfläche aus einzelnen unterschiedlichen, in gleichen Rasterabständen aufeinanderfolgenden Farbelementen zusammengesetzt ist. Die Farbelemente sind dort vorzugsweise im Druckverfahren aufgebracht und haben beispielsweise eine runde, in Zeilenrichtung gestreckte oder eine ovale Form mit quer zur Zeilenrichtung liegender Längsachse. Bei einem anderen bevorzugten Ausführungsbeispiel des älteren Vorgschlages sind die Farbelemente sechseckig ausgebildet. Diese Gestaltung hat den Vorteil, dass sich die Farbelemente bienenwabenartig spaltfrei zusammensetzen lassen. Bei diesem Verfahren springt die Schreibelektrode von dem jeweils gerade freigelegten Farbelement einer Farbelementengruppe zu dem gewünschten Farbelement des anschliessenden Mehrfarbenrasters, so dass die Positionierbewegung der Schreibelektrode je nach Farbanwahl sich aus ganz unterschiedlichen Vorschubbeträgen zusammensetzt.

Aus der FR-A-2 197 345 ist ein Verfahren zur mehrfarbigen Aufzeichnung auf einem elektrosensitiven Aufzeichnungsträger bekannt, welcher unter dem elektrosensitiven Belag mit verschiedenfarbigen Streifen in Form eines mehrfarbigen Linienrasters bedruckt ist.

Bei diesem bekannten Aufzeichnungsverfahren ist eine definierte Positionierbewegung von mehreren, kammartig nebeneinanderliegenden Schreibelektroden vorgegeben, so dass entsprechend dem mehrfarbigen Linienraster an der jeweiligen Ausbrennstelle nur eine bestimmte, dort vorhandene Farbe durch Ausbrennen des Metallbelages freigelegt werden kann. Die Auswahl aus mehreren verschiedenen Farben an jedem Ausbrennpunkt ist bei der bekannten Anordnung nicht möglich. Vielmehr werden bei dem bekannten Verfahren die Schreibelektroden jeweils um einen konstanten Vorschubbetrag vorbewegt, welcher dem Abstand zweier benachbarter Farbelemente entspricht, d.h., die Einzelelektroden werden entsprechend dem vorgegebenen konstanten Vorschubraster getaktet.

### Vorteile der Erfindung

Das erfindungsgemässe Verfahren mit den kennzeichnenden Merkmalen des Hauptanspruchs hat den Vorteil, dass farbige Informationsinhalte und insbesondere mehrfarbige Bilder unter Verwendung bekannter und bewährter elektrosensitiver Aufzeichnungsträger originalgetreu aufgezeichnet werden können, wenn an jeder Ausbrennstelle der Schreibelektrode exakt über dem der gewünschten Farbe entsprechenden Farbelement des mehrfarbigen Linienrasters der Schreibstrom zugeführt wird. Die einzelnen Farbelemente des mehrfarbigen Linienrasters werden an jeder möglichen Ausbrennstelle durch die über die Fläche der Ausbrennstelle sich hinweg erstreckenden Abschnitte der Rasterlinien gebildet.

Durch die in den Unteransprüchen aufgeführten Massnahmen sind vorteilhafte Weiterbildungen des im Hauptanspruch angegebenen Verfahrens möglich. Bei einfarbiger Wiedergabe von Informationsinhalten wird zur exakten Anwahl der gewünschten Farbelemente an den einzelnen Ausbrennstellen vorgeschlagen, dass zu Beginn der Aufzeichnung oder am Anfang einer jeden Schreibzeile ein konstantes Rastermass entsprechend der Stellung der gewünschten Farbelemente im Linienraster einjustiert wird. Bei mehrfarbigen Aufzeichnungen, insbesondere bei Wiedergabe von Farbbildern, wird zur exakten Anwahl der gewünschten Farbelemente an den einzelnen Ausbrennstellen vorgeschlagen, dass aus den einzelnen Informations- bzw. Abtastsignalen auch Phasensignale abgeleitet werden, welche die Positionierbewegung der Schreibelektrode innerhalb des mehrfarbigen Linienrasters so steuern, dass das bzw. die gewünschten Farbelemente angewählt werden. Auf diese Weise wird ähnlich wie beim Farbfernsehen oder bei Mehrfarbendruck nach dem additiven bzw. subtraktiven Farbmischverfahren der gewünschte Farbeffekt erzielt.

Zur Wiedergabe von Mischfarben kann das Linienraster mindestens zwei Grundfarben in den Farbelementengruppen enthalten. Der Kontrast des Bildes kann erhöht werden, wenn das Linienraster die Komplementärfarben von mindestens zwei Grundfarben enthält, so dass zur Darstellung der Grundfarbe zwei Farbelemente je Ausbrennstelle freigelegt werden müssen.

Der Aufzeichnungsträger kann so ausgebildet sein, dass das Linienraster parallel zur Schreibzeilenrichtung der Schreibelektrode verläuft. In diesem Fall sind die einzelnen, durch Abschnitte der Rasterlinien gebildeten Farbelemente einer Farbelementengruppe quer zur Schreibzeilenrichtung nebeneinander angeordnet. Bei mehrfarbiger Aufzeichnung wird dann die Schreibelektrode durch die Phasensignale quer zur Schreibzeilenrichtung jeweils so weit ausgelenkt, bis die Schreibelektrode über dem freizulegenden Farbelement steht.

Das Linienraster kann durch entsprechende Einfärbung des tragenden Grundkörpers oder aber durch Auftragen einer Lackschicht auf den Grundkörper gebildet sein. Das kann insbesondere im Mehrfarben-Offsetdruck geschehen.

Wenn die beschriebenen Aufzeichnungsträger in Betrachtungsgeräten lesbar sein sollen, in welchen sie von unten her angestrahlt werden, oder wenn der Informationsinhalt der Aufzeichnungsträger pausfähig sein soll, wird ein transparenter Lack zur Herstellung der Farbschicht verwendet oder der entsprechend eingefärbte Grundkörper aus transparentem Kunststoff hergestellt.

Die einzelnen Linien bzw. Farbelemente des Rasters können vorteilhaft unmittelbar aneinandergrenzen, wodurch Zwischenräume zwischen den Farbelementen vermieden werden und sich eine gute Farbwiedergabe erzielen lässt. Die Breite der Linien des Rasters kann zweckmässig so auf die Querschnittsform abgestimmt sein, dass die Durchmesser der einzelnen Ausbrennpunkte der Linienbreite entsprechen. Die Durchmesser der einzelnen Ausbrennpunkte werden zweckmässig kleiner als das Auflösungsvermögen des menschlichen Auges gewählt. Bei normalem Betrachtungsabstand von 30 cm bedingt das eine Linienbreite bzw. Punktgrösse von höchstens 0,15 mm.

*Zeichnung*

Das erfindungsgemässe Verfahren ist anhand mehrerer Ausführungsbeispiele des Aufzeichnungsträgers und einer Vorrichtung in der Zeichnung dargestellt und in der nachfolgenden Beschreibung näher erläutert. Es zeigen die Figuren 1 und 2 in perspektivischer Explosionsdarstellung Teile von Aufzeichnungsträgern, die sich in bezug auf ihren grundsätzlichen Aufbau voneinander unterscheiden. In den Figuren 3 und 4 sind stark vergrössert verschiedene Ausbildungen des mehrfarbigen Linienrasters der Aufzeichnungsträger dargestellt. Figur 5 zeigt eine Draufsicht auf einen Aufzeichnungsträger mit senkrecht zur Zeilenrichtung verlaufenden Markierungen am Beginn und Ende des Aufzeichnungsfeldes. In Figur 6 ist schematisch eine Vorrichtung zur Aufzeichnung von mehrfarbigen Bildern nach dem erfindungsgemässen Verfahren dargestellt.

*Beschreibung der Ausführungsbeispiele und der Vorrichtung*

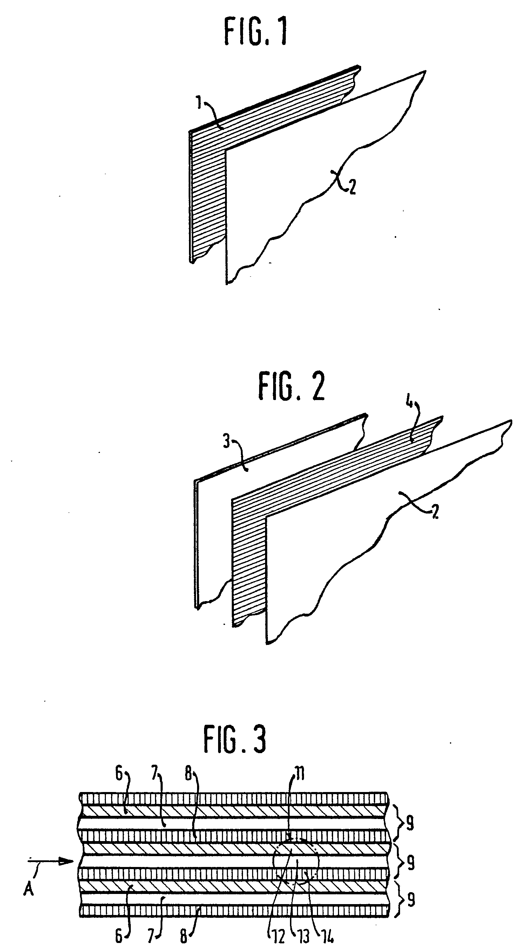

Der Aufzeichnungsträger nach Fig. 1 hat einen elektrisch isolierenden Grundkörper 1 und einen Metallfilm 2, der im Vakuum auf den Grundkörper 1 aufgedampft ist. Der Grundkörper 1 besteht aus einem lichtdurchlässigen Kunststoff, der entsprechend dem gewünschten Linienraster in der Masse polychrom eingefärbt ist. Dieser Aufzeichnungsträger eignet sich für die Auswertung in Geräten, bei denen der Aufzeichnungsträger von der vom Betrachter abgekehrten Seite her durch eine Lichtquelle angestrahlt wird.

Der Aufzeichnungsträger nach Fig. 2 hat einen Grundkörper 3 aus beliebigem, jedoch elektrisch isolierendem Material, z.B. Papier, auf welches eine Lackschicht 4 bzw. Farbschicht zur Bildung des Linienrasters aufgetragen bzw. -gedruckt ist. Die Lackschicht 4 ist durch einen aufgedampften Metallfilm 2 nach oben abgedeckt. Dieser Aufzeichnungsträger kann durch direktes Lesen bzw. Betrachten ausgewertet werden.

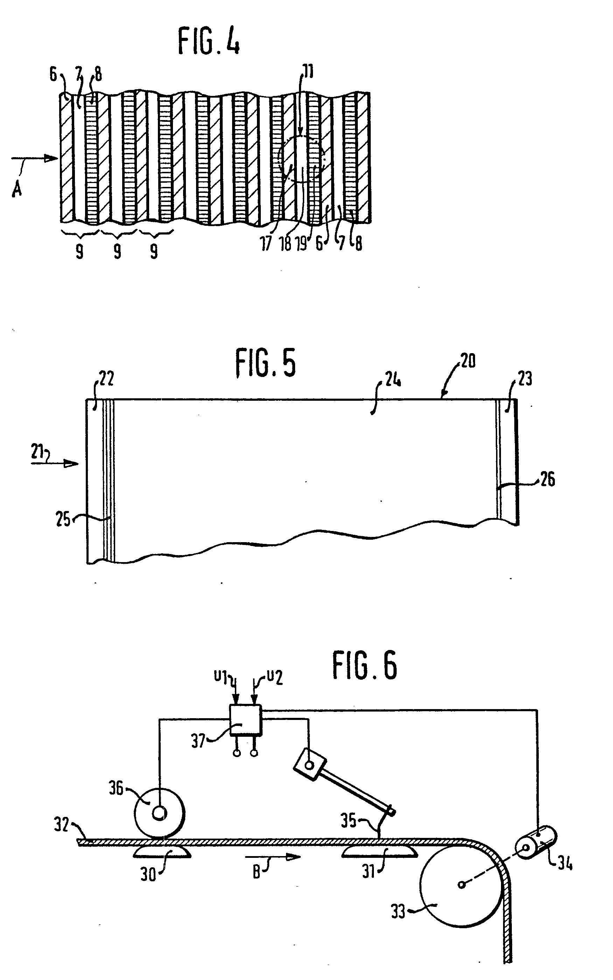

Bei den beiden Aufzeichnungsträgern nach den Fig. 1 und 2 kann das Linienraster eine der in den Fig. 3 und 4 dargestellte Lage und Form haben. Beide Linienraster sind gebildet durch parallellaufende verschiedenfarbige Rasterlinien 6, 7, 8, welche sich in der gleichen Reihenfolge periodisch wiederholen und über das gesamte Aufzeichnungsfeld des Aufzeichnungsträgers erstrecken. Die Rasterlinien 6, 7, 8 grenzen spaltfrei aneinander an und sind etwa 0,15 mm breit. Der Querschnitt der Schreibelektrode sowie die elektrischen Schreibimpulse sind so auf das Linienraster abgestimmt, dass der Durchmesser der einzelnen Ausbrennpunkte etwa der Breite der Rasterlinien entspricht. Dadurch lassen sich kontrastreiche Farbbilder erzielen, deren Farbraster bei normalem Betrachtungsabstand nicht auflösbar ist.

Beim gewählten Ausführungsbeispiel enthält das Linienraster in periodischer Reihenfolge rote, gelbe und grüne Rasterlinien. Zur Unterscheidung der Farben sind in der Zeichnung die roten Rasterlinien 6 schräg schraffiert, die gelben Rasterlinien 7 weiss gelassen und die grünen Rasterlinien 8 senkrecht (Fig. 3) bzw. waagrecht (Fig. 4) schraffiert. Anstelle dieser Dreifarbenraster können auch Mehrfarbenraster verwendet werden, z.B. mit den Farben Rot, Blau, Schwarz und Gelb bzw. Grün. In manchen Fällen kann es sich auch empfehlen, die Komplementärfarben von mindestens zwei Grundfarben im Linienraster vorzusehen.

Bei der Anordnung des Linienrasters nach Fig. 3 laufen die Rasterlinien 6, 7 und 8 parallel zur Schreibzeilenrichtung der Schreibelektrode, welche durch den Pfeil A angedeutet ist. Infolge der sich in der gleichen Reihenfolge wiederholenden Farben ergeben sich untereinander gleiche Farbliniengruppen 9, welche ebenfalls parallel zur Schreibzeilenrichtung A verlaufen. Die Farbliniengruppen 9 wiederum bilden in Schreibzeilenrichtung A eine fortgesetzte Folge von aneinander anschliessenden und spaltlos ineinander übergehenden Farbelementengruppen im Flächenbereich einer jeden möglichen Ausbrennstelle des Aufzeichnungsträgers, welcher durch die Kreislinie 11 angedeutet ist. Eine jede Farbelementengruppe besteht aus drei einzelnen Farbelementen 12, 13, 14, welche in einer senkrecht zur Schreibzeilenrichtung A gedachten Achse nebeneinanderliegen und jedes für sich durch einen Längsabschnitt einer Rasterlinie 6, 7, 8 gebildet ist.

Bei einfarbigen Aufzeichnungen wird zu Beginn der Aufzeichnung bzw. am Anfang einer jeden Schreibzeile das Aufzeichnungs- bzw. Ausbrennraster gegenüber dem Linienraster des Aufzeichnungsträgers entsprechend der Stellung der gewünschten Farbelemente im Linienraster quer zur Schreibzeilenrichtung A einjustiert.

Bei mehrfarbigen Aufzeichnungen, insbesondere bei Wiedergabe von Farbbildern, werden aus den Informations- bzw. Tastsignalen des Aufnahmegerätes auch Phasensignale abgeleitet, welche über geeignete Verstellmittel die Schreibelektrode quer zur Schreibzeilenrichtung A jeweils so weit auslenken, bis die Schreibelektrode über dem jeweils freizulegenden Farbelement 12, 13 oder 14 steht. Der durch die Linie 11 umrissene Flächenbereich stellt den Bereich dar, innerhalb welchem die Schreibelektrode durch ihre von den Phasensignalen gesteuerte Verstellmittel aus dem theoretischen Zentrum der Ausbrennstelle heraus auslenkbar ist. Dieser Bereich kann auch ein anderes als das dargestellte Flächenprofil haben.

Bei der Anordnung des Linienrasters nach Fig. 4 laufen die Rasterlinien 6, 7 und 8 quer zur Schreibzeilenrichtung A, so dass sich in Schreibzeilenrichtung hintereinanderliegende Farbliniengruppen 9 ergeben. Die Farbliniengruppen 9 bilden hier wiederum eine Aufeinanderfolge von Farbelementengruppen, in denen die einzelnen Farbelemente 17, 18, 19 jedoch in Schreibzeilenrichtung A aufeinanderfolgen. In diesem Fall lenken bei mehrfarbiger Aufzeichnung

die Schreibelektrode in Schreibzeilenrichtung A aus, d.h. sie vergrössern oder verkleinern den Vorwärtshub der Schreibelektrode, wenn ein nicht genau unter dem Zentrum der Ausbrennstelle liegendes Farbelement, hier Gelb, freigelegt werden soll.

In beiden beschriebenen Linienrastern können bestimmte Rasterlinien zusätzlich zur normalen Pigmentierung ein magnetisierbares Pulver enthalten, welches vor dem Beschreiben des Aufzeichnungsträgers magnetisiert worden ist. Diese Rasterlinien dienen dann — zusätzlich zur Farbmischung — noch als Referenzpunkte zur induktiven Signalgabe an den Schreibkopf, die zu dessen exakter Positionierung gegenüber dem Linienraster und gegebenenfalls auch zum Auslösen von Schreibimpulsen dienen. Weil diese Referenzpunkte unmittelbar im Aufzeichnungsfeld liegen, ist der grösstmögliche Positionierungsfehler der Schreibelektrode gegenüber dem Linienraster bei einer Feuchtedehnung des Aufzeichnungsträgers besonders gering.

Anstelle der induktiven Übertragung von Referenzsignalen kann auch eine optische Übertragung vorgesehen werden. In diesem Fall können die zur Referenz dienenden Rasterlinien einen anderen Glanzgrad als die anderen Rasterlinien haben, derart, dass sie auch nach der Metallisierung mit Hilfe einer optischen Abtasteinrichtung, bestehend aus Auflicht-Beleuchtung und lichtempfindlichem Sensor, erkennbar sind.

In Fig. 5 ist ein Aufzeichnungsträger 20 dargestellt, der an beiden senkrecht zur Schreibrichtung 21 verlaufenden Grenzzonen 22 und 23 seines metallisierten Bereiches 24 mit Markierungslinien 25 und 26 versehen ist. Der gegenseitige Abstand der Markierungslinien 25 entspricht dem Abstand, welchen die Elemente einer Farbe in einer Zeile des Linienrasters nach Fig. 4 untereinander haben. Sie können beispielsweise zur erleichterten Anwahl der Farben zu Beginn der Aufzeichnung, aber auch zu anderen Referenzzwecken dienen. Die Markierungslinien 26 am anderen Ende des metallisierten Bereiches 24 können beispielsweise zur Erfassung und Auswertung der durch Feuchtigkeitsaufnahme bedingten Flächendehnung des Aufzeichnungsträgers dienen. Wenn die Markierungslinien ausserhalb des metallisierten Bereiches 24 liegen, können sie auch optisch erfasst werden.

Die Markierungslinien 25 und 26 können auch zusätzlich zu den inmitten des Aufzeichnungsfeldes liegenden Referenzlinien des Aufzeichnungsträgers vorgesehen werden. Der Aufzeichnungsträger könnte ferner auch an der vom elektrosensitiven Belag abgekehrten Rückseite mit z.B. optisch erkennbaren und auswertbaren Referenzmarken versehen sein.

Die in Fig. 6 dargestellte Vorrichtung zur Durchführung des erfindungsgemässen Verfahrens hat zwei feststehende Auflager 30, 31, über welche ein biegsamer Aufzeichnungsträger 32 mittels einer Transporteinrichtung 33, 34 in Richtung des Pfeiles B hinwegziehbar ist. Am elektrosensitiven Belag des Aufzeichnungsträgers 32 liegt im Bereich des Auflagers 31 eine Schreibelektrode 35 und im Bereich des Auflagers 30 eine grossflächige Gegenelektrode 36 an, welche als mitlaufende Rolle ausgebildet ist. Die Elektroden 35, 36 sind mit einem elektrischen Impulsgenerator 37 verbunden, der nach Massgabe von Scheibsignalen $u_1$ und Phasensignalen $u_2$ die Schreibelektrode 35 und die Antriebsvorrichtung 33, 34 so steuert, dass ein dem abzubildenden Original entsprechendes Raster auf dem Aufzeichnungsträger 32 entsteht. Die Phasensignale $u_2$ haben dabei die Aufgabe, die Schreibelektrode 35 so gegenüber dem Aufzeichnungsträger zu positionieren, dass an jeder Ausbrennstelle jeweils das gewünschte Farbelement der unter der Ausbrennstelle liegenden Farbelementengruppe des Linienrasters am Aufzeichnungsträger freigelegt wird.

## Patentansprüche

1. Verfahren zum Aufzeichnen von farbigen Informationen und zur Wiedergabe von Originalen wie Schriftstücken, Zeichnungen und Bildern auf einem Aufzeichnungsträger (1, 3, 4, 20) mit elektrosensitivem Belag (2), insbesondere Registrier-Metallpapier, wobei durch Informations- bzw. Abtastsignale ein elektrischer Impulsgenerator (37) angesteuert wird, an den mindestens eine Schreibelektrode (35) angeschlossen ist, welche den elektrosensitiven Belag des Aufzeichnungsträgers überstreicht und aus diesem gemäss den in elektrische Impulse umgesetzten Signalen farbige Punkte herausbrennt, die unterhalb des elektrosensitiven Belages innerhalb eines Mehrfarbenrasters liegen, das aus in gleichen Rasterabständen aufeinanderfolgenden unterschiedlichen Farbelementen (6) gebildet wird, so dass dadurch das Abbild des Informationsinhalts bzw. des Originals entsteht, dadurch gekennzeichnet, dass zur Wiedergabe in verschiedenen Farben die Schreibelektrode (35) in ihrer Positionierbewegung auf das jeweils nächste Mehrfarbenraster hin so gesteuert wird, dass zum Abbilden der gewünschten Farbe innerhalb dieses Rasters jeweils das entsprechende Farbelement bzw. bei Mischfarben die zu deren Bildung notwendigen benachbarten Farbelemente aus der das Mehrfarbenraster bildenden Farbelementengruppe (8) angewählt und freigelegt werden, und dass die unter dem elektrosensitiven Belag (2) liegende Farbfläche (1, 4) als mehrfarbiges Linienraster ausgebildet ist.

2. Verfahren nach Anspruch 1, dadurch gekennzeichnet, dass bei einfarbiger Wiedergabe eines Informationsinhalts zu Beginn der Aufzeichnung bzw. am Anfang einer Schreibzeile ein konstantes Rastermass entsprechend der Stellung der gewünschten Farbelemente im Linienraster einjustiert wird.

3. Verfahren nach Anspruch 1, dadurch gekennzeichnet, dass bei mehrfarbiger Aufzeichnung, insbesondere bei Wiedergabe von Farbbildern, aus den Informations- bzw. Tastsignalen auch Phasensignale abgeleitet werden, welche die Positionierbewegung der Schreibelektrode (35) innerhalb des mehrfarbigen Linienrasters so steuern, dass das bzw. die gewünschten Farbelemente (6, 7, 8) angewählt werden.

4. Verfahren nach Ansprüchen 1 bis 3, dadurch gekennzeichnet, dass das Linienraster parallel zur Schreibzeilenrichtung (A) der Schreibelektrode verläuft (Fig. 3).

## Claims

1. Process for recording coloured information and for reproducing originals such as documents, drawings and pictures on a recording carrier (1, 3, 4, 20) having an electrosensitive covering (2), in particular a metallised paper recording medium, wherein information signals or scanning signals drive an electrical pulse generator (37) to which is connected at least one write electrode (35) which brushes over the electrosensitive covering of the recording carrier and burns out of this covering, in accordance with the signals coverted to electrical pulses, coloured dots which are located below the electrosensitive covering within a multicolour screen which is formed of different colour elements (6) following one another at equal screen spacings, so that by this burning-out the reproduction of the information content or of the original is formed, characterised in that for reproduction in different colours the positioning movement of the write electrode (35) towards the next multicolour screen is so controlled that to reproduce the desired colour the corresponding colour element within this screen is selected and exposed or, in the case of mixed colours, the adjacent colour elements required for forming the mixed colour are selected from the colour element group (8) forming the multicolour screen and are exposed, and that the colour surface (1, 4) located below the electrosensitive covering (2) is constructed as a multicolour line screen.

2. Process according to Claim 1, characterised in that the case of single-colour reproduction of an information content, a constant screen step, corresponding to the position of the desired colour elements in the line screen, is set at the beginning of the recording or at the beginning of a write line.

3. Process according to Claim 1, characterised in that the case of multicolour recording, especially in the case of reproduction of coloured images, phase signals are also derived from the information signals or scanning signals, which phase signals control the positioning movement of the write electrode (35) within the multicolour line screen in such a way that the desired colour element or elements (6, 7, 8) is or are selected.

4. Process according to Claims 1 to 3, characterised in that the line screen runs parallel to the write line direction (A) of the write electrode (Figure 3).

## Revendications

1. Procédé pour l'enregistrement d'informations de couleur et pour la reproduction d'originaux tels que documents imprimés, dessins et images sur un support d'enregistrement (1, 3, 4, 20) pourvu d'une couche de revêtement électrosensitif (2), notamment papier métallique enregistreur, des signaux d'information ou de détection commandant un générateur d'impulsions électrique (37) auquel est raccordée au moins une électrode d'inscription (35), qui balaye la couche de revêtement électrosensitif du support d'enregistrement et fait ressortir par brûlure de celle-ci, selon les signaux transformés en impulsions électriques, des points de couleur situés au-dessous de la couche de revêtement électrosensitif à l'intérieur d'une trame à plusieurs couleurs, qui est formée à partir d'éléments de couleur (6) différents, se succédant à de mêmes intervalles de trame, de telle sorte qu'il en résulte ainsi la représentation du contenu d'informations ou de l'original, caractérisé en ce que, pour la reproduction en différentes couleurs, l'électrode d'inscription (35), dans son déplacement de positionnement en allant sur la trame à plusieurs couleurs qui est chaque fois la suivante, est commandée de telle manière, que pour représenter la couleur désirée à l'intérieur de cette trame, chaque fois l'élément de couleur correspondant ou dans le cas de couleurs mélangées les éléments de couleur voisins nécessaires pour leur formation sont sélectionnés et dégagés à partir du groupe (8) d'éléments de couleur formant la trame à plusieurs couleurs, et en ce que la surface de couleur (1, 4) située sous la couche de revêtement électrosensitif (2) est constituée sous forme de trame de lignes de plusieurs couleurs.

2. Procédé selon la revendication 1, caractérisé en ce que dans le cas de reproduction d'une seule couleur d'un contenu d'informations, au commencement de l'enregistrement ou au début d'une ligne décriture, on règle une dimension de trame constante en correspondance avec la position des éléments de couleur dérisés dans la trame de lignes.

3. Procédé selon la revendication 1, caractérisé en ce que dans le cas d'enregistrement en plusieurs couleurs, notamment dans le cas de reproduction d'images de couleur, à partir des signaux d'information ou de détection sont dérivés également des signaux de phases, qui commandent de telle manière le déplacement de positionnement de l'électrode d'inscription (35) à l'intérieur de la trame de lignes de plusieurs couleurs, que sont sélectionnés le ou les éléments de couleur désirés (6, 7, 8).

4. Procédé selon les revendications 1 à 3, caractérisé en ce que la trame de lignes s'étend parallèlement à la direction (A) des lignes d'écriture de l'électrode d'inscription (fig. 3).

# FIG. 1

# FIG. 2

# FIG. 3

# FIG. 4

# FIG. 5

# FIG. 6